(19) **Europäisches Patentamt**

**European Patent Office**

**Office européen des brevets**

(11) **EP 0 935 207 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(51) Int Cl.:
***G06F 17/50*** *(2006.01)*

(21) Anmeldenummer: **98100561.4**

(22) Anmeldetag: **14.01.1998**

(54) **Verfahren zur Planung, zum Bau und/oder zur Instandhaltung eines Rohrleitungssystemes und hierzu hergerichtete Datenverarbeitungsanlage**

Method for planning, constructing and /or maintaining a piping system and data processing system therefor

Méthode pour la planification, la construction et/ou la maintenance d'un systéme de canalisations et systéme de traitement de données à cet effet

(84) Benannte Vertragsstaaten:
**DE FR SE**

(43) Veröffentlichungstag der Anmeldung:
**11.08.1999 Patentblatt 1999/32**

(73) Patentinhaber: **Framatome ANP GmbH
91058 Erlangen (DE)**

(72) Erfinder:
 • **Kern, Reinhard
  91301 Forchheim (DE)**
 • **Bickel, Ruth
  91058 Erlangen (DE)**
 • **Pöschel, Ernst-Eckhardt
  91052 Erlangen (DE)**
 • **Rusitschka, Erwin
  91085 Weisendorf (DE)**
 • **Ziegerer, Manfred
  90431 Nürnberg (DE)**

(74) Vertreter: **Tergau & Pohl Patentanwälte
Mögeldorfer Hauptstrasse 51
90482 Nürnberg (DE)**

(56) Entgegenhaltungen:
**EP-A- 0 696 775        US-A- 5 517 428**

**Beschreibung**

Die Erfindung liegt auf dem Gebiet der Planung, des Baus und/oder der Instandhaltung von - insbesondere umfangreichen und ausgedehnten - Rohrleitungssystemen.

Sie betrifft ein Verfahren zur Planung und/oder zum Bau und/oder Instandhaltung eines aus mehreren Leitungsabschnitten bestehenden Rohrleitungssystemes, insbesondere in einem Kraftwerk, wobei den Leitungsabschnitten jeweils ein Satz von Leitungsparametern zugeordnet ist, der insbesondere einen maximal zulässigen Druck, eine maximal zulässige Temperatur sowie einen Nenndurchmesser umfaßt. Die Erfindung bezieht sich weiterhin auf eine Datenverarbeitungsanlage.

Großtechnische Anlagen bestehen häufig aus sehr umfangreichen, ausgedehnten und komplizierten Rohrleitungssystemen. Den einzelnen Leitungsabschnitten eines solchen Rohrleitungssystemes sind häufig unterschiedliche Leitungsparameter zugeordnet. Insbesondere sind solche Leitungsparameter Auslegungsparameter und umfassen beispielsweise einen maximal zulässigen Druck, eine maximal zulässige Temperatur sowie einen Nenndurchmesser. Dann dürfen nur solche Rohrbauteile in den Leitungsabschnitt eingebaut werden, deren physikalische Belastungsgrenze oberhalb des jeweiligen Auslegungsparameters liegt.

In dem Fachartikel "Projektierung des EPR" in atw-Internationale Zeitschrift für Kernenergie, 42. Jg. (1997), Heft 10 - Oktober, Seite 616 bis 618, ist ein Verfahren zur Erfüllung der systemtechnischen Anforderungen bei der Einplanung von Rohrbauteilen beschrieben, bei dem auf Basis von Rohrleitungs-Eingangswerten, eines Regelkatalogs und einer "Kesselformel" automatisch entsprechende Rohrklassen, der maximale Biegeradius, der Außendurchmesser und die Wanddicke der Rohrstränge ermittelt werden.

In dem "Dubbel-Taschenbuch für den Maschinenbau", Springer-Verlag, 1995, 18. Auflage, ist auf Seite K6 eine Formel angegeben, mit Hilfe derer unter anderem aus einem Berechnungsdruck und einem Rohraußendurchmesser eine erforderliche Wanddicke berechnet werden kann.

Beispielsweise ist bei einem neuentwickelten Druckwasserreaktor, dem Europäischen Druckwasserreaktor (EPR), allein in dem umbauten Raum von insgesamt ca. 17.000 Rohrsträngen mit einer Länge von etwa 150 km und mit größenordnungsmäßig 10.000 Rohrbauteilen auszugehen. Bei der Planung, dem Bau und/oder der Instandhaltung einer derart umfangreichen Anlage können leicht Fehler auftreten, deren Beseitigung zu zusätzlichen Kosten oder zu einer Zeitverzögerung führen könnte. Beispielsweise könnte es vorkommen, daß zwei benachbarte, zu einem gemeinsamen Rohrstrang gehörige Rohrbauteile unterschiedliche oder zu geringe Belastungsgrenzen aufweisen, obwohl für den Rohrstrang einheitliche bzw. höhere Auslegungsparameter vorgesehen waren. Ein solcher, beispielhaft aus vielen tausend Fehlermöglichkeiten herausgegriffener Fehler ist auch unter dem Gesichtspunkt der für den EPR angestrebten vollendeten Sicherheitstechnik von vornherein zu vermeiden, so daß er nicht erst nach einem Probelauf oder einer Funktionsüberprüfung vor dem Anfahren des Reaktors kosten- oder zeitintensiv beseitigt werden muß.

Der Erfindung liegt demzufolge die Aufgabe zugrunde, die Planung, den Bau und/oder die Instandhaltung eines Rohrleitungssystemes dahingehend zu optimieren, daß ein zielgerichtetes Erstellen oder Erneuern eines Leitungsabschnittes möglich wird, ohne daß dabei Fehler auftreten könnten. Die Erfindung zielt somit auf eine Beschleunigung und/ oder Vereinfachung der Planung, des Baus und/oder der Instandhaltung eines Rohrleitungssystemes ab. Es soll hierzu sowohl ein Verfahren als auch eine Datenverarbeitungsanlage angegeben werden.

Die auf ein Verfahren bezogene Aufgabe wird gemäß der Erfindung dadurch gelöst, daß ausgehend von einem ausgewählten Satz von Leitungsparametern für einen zu erstellenden oder zu erneuernden Leitungsabschnitt ein Werkstoff und eine für eine Belastung gemäß dem ausgewählten Satz von Leitungsparametern ausreichende Wanddicke eines zur Verfügung stehenden Rohrbauteiles bestimmt, und daß daraus eine für den Leitungsabschnitt eindeutige Rohrklasse generiert wird, mit der ein ausreichend belastbares Rohrbauteil für den Leitungsabschnitt identifizierbar ist.

Dem Verfahren liegen unter anderem die Erkenntnisse zugrunde, daß ein zielgerichtetes, weitgehend fehlerfreies Erstellen oder Erneuern eines Leitungsabschnittes nur möglich ist, falls dem Leitungsabschnitt eine Rohrklasse zugeordnet wird, welche einerseits mehrere ähnliche Leitungsabschnitte, d.h. Leitungsabschnitte mit ähnlichen Leitungsparametern, zusammenfaßt und andererseits eine eindeutige Identifizierung und/oder Auswahl eines Rohrbauteils zuläßt, und daß die Zuordnung unter Berücksichtigung von Leitungsparametern, einer oder mehrerer Werkstoffkenngrößen und einer oder mehrerer Rohrbauteileabmessungen oder -dimensionen stattfinden muß.

Das Verfahren dient somit z.B. als qualitätssicherndes Hilfsmittel für einen Ingenieur, Monteur oder Servicemitarbeiter, der in einen Leitungsabschnitt ein neues Rohrbauteil oder ein Austausch-Rohrbauteil einzubauen hat.

Nach einer bevorzugten Ausgestaltung des Verfahrens wird die Rohrklasse dadurch generiert,

- daß in einem ersten Speicher mindestens einem Werkstoff jeweils ein Festigkeitswert und eine Verwendungspriorität zugeordnet sind, sowie
- daß in einem zweiten Speicher Außendurchmesser und Wanddikken von zur Verfügung stehenden Rohrbauteilen gespeichert sind,

daß ausgehend von dem ausgewählten Satz von Leitungsparametern für den zu erstellenden oder zu erneuernden Leitungsabschnitt

a) der Werkstoff dadurch bestimmt wird, daß aus dem ersten Speicher ein Werkstoff mit der höchsten Verwendungspriorität und der diesem Werkstoff zugeordnete Festigkeitswert ausgewählt werden,
b) daß für den Werkstoff die maximal zulässige Transversalspannung ermittelt wird,
c) daß aus dem zweiten Speicher ein Außendurchmesser ausgewählt wird,
d) daß aus dem Außendurchmesser und der Transversalspannung eine minimale Wanddicke ermittelt wird,
e) daß die Wanddicke dadurch bestimmt wird, daß mit dem Werkstoff und der minimalen Wanddicke aus dem zweiten Speicher die nächstgrößere Wanddicke eines zur Verfügung stehenden Rohrbauteiles ermittelt wird und
f) daß aus dem ausgewählten Satz von Leitungsparametern, dem Werkstoff und der nächstgrößeren Wanddicke die für den Leitungsabschnitt eindeutige Rohrklasse generiert wird.

Mit der nach dieser Ausgestaltung vorgesehenen Regel ist die Zuordnung, d.h. Generierung, der Rohrklasse zu dem Leitungsabschnitt besonders einfach, schnell und zuverlässig möglich.

Die Generierung der Rohrklasse, bzw. einer Bezeichnung oder eines Code-Namens für die Rohrklasse, kann beispielsweise dadurch geschehen, daß Anfangsbuchstaben, Abkürzungen, Code-Nummern bzw. Zahlenwerte für den Werkstoff, die Leitungsparameter und/oder die nächstgrößere bestimmte Wanddicke zu einer Rohrklassenbezeichnung zusammengefügt werden.

Anstelle der Transversalspannung kann gegebenenfalls auch eine andere mechanische Spannung verwendet werden.

Ein zur Verfügung stehendes Rohrbauteil kann beispielsweise ein Rohr, insbesondere ein geradliniges Rohr, ein gewinkeltes Rohr (Rohrbogen, L-Stück), eine Verzweigung (T-Stück), ein Reduzierstück oder eine Armatur sein.

Das Verfahren wird unter Verwendung einer elektronischen Datenverarbeitungsanlage oder eines Computers durchgeführt. Der erste und/oder der zweite Speicher sind dann Teil der Datenverarbeitungsanlage oder Bestandteil eines grö-ßeren, zur Datenverarbeitungsanlage gehörigen magnetischen, optischen oder elektronischen Speichers.

Der erste und/oder der zweite Speicher sind bervorzugt auf der Datenverarbeitungsanlage in Form einer oder mehrerer Tabellen implementiert.

Die Verwendung einer elektronischen Datenverarbeitungsanlage zur Durchführung des Verfahrens bietet den zusätzlichen Vorteil, daß das Verfahren weitgehend automatisiert und ohne Einschalten menschlicher Verstandestätigkeit durchgeführt werden kann. Dies ist besonders bei der Planung, dem Bau und/oder der Instandhaltung von sehr großen und umfangreichen Rohrleitungssystemen von Vorteil, da sich bei einer manuellen Durchführung des Verfahrens durch Projektierungs- oder Servicepersonal sehr leicht Fehler ergeben könnten. Im Hinblick auf eine erhöhte Qualitätssicherung ist die Verwendung einer elektronischen Datenverarbeitungsanlage zur Durchführung des Verfahrens gegenüber der Einschaltung menschlicher Verstandestätigkeit vorzuziehen.

Die den Leitungsabschnitten jeweils zugeordneten Sätze von Leitungsparametern können entweder manuell über ein Dateneingabegerät in die Datenverarbeitungsanlage eingegeben oder aus einem Parameter-Speicher, in dem die Leitungsparameter vorher abgelegt wurden, ausgelesen werden.

Der einem Werkstoff zugeordnete Festigkeitswert kann beispielsweise ein Wert für die Zugfestigkeit (Reißfestigkeit) und/oder für den Fließbeginn (Dehngrenze) sein. Dem Werkstoff können insbesondere jeweils mehrere Festigkeitswerte in Abhängigkeit von der Temperatur zugeordnet sein.

Es können dem Werkstoff allein oder zusätzlich einer oder mehrere Sicherheits-Beiwerte zugeordnet sein.

Die maximal zulässige Transversalspannung wird beispielsweise als Minimum aus einem ersten und einem zweiten Quotienten ermittelt, wobei der erste Quotient aus der Zugfestigkeit dividiert durch einen ersten Sicherheits-Beiwert, und der zweite Quotient aus der Streckgrenze dividiert durch einen zweiten Sicherheits-Beiwert gebildet werden.

Die minimale Wanddicke $t_{min}$ wird bevorzugt unter Auswertung der Formel

$$t_{min} = \frac{p_A \cdot D_A}{2 \cdot \sigma_{zul} \cdot l_f + p_A} + A$$

ermittelt. Darin bezeichnet $p_A$ den maximal zulässigen Druck im zu erstellenden oder zu erneuernden Leitungsabschnitt. $D_A$, $\sigma_{zul}$, $l_f$ und $A$ stehen für den bestimmten Außendurchmesser, die ermittelte maximal zulässige Transversalspannung, einen Longitudinalfaktor (Verschwächungsbeiwert) bzw. für die Summe der auftretenden Toleranzen (Wanddickenzuschlag).

Die Formel wird bevorzugt unter Zuhilfenahme eines Computers ausgewertet. Gegenüber einer Vorgehensweise, bei der konstante Näherungswerte für minimale Wanddicken innerhalb bestimmter Druck- und Temperaturintervalle in einer Tabelle vorliegen und bei der zur Bestimmung der minimalen Wanddicke für den zu erstellenden oder zu erneuernden Leitungsabschnitt für eine konkrete Temperatur und einen konkreten Druck ein Näherungswert aus der Tabelle abgelesen wird, bietet die Berechnung der minimalen Wanddicke unter Zuhilfenahme eines Computers den Vorteil einer exakten, kontinuierlichen und intervallosen Berechnung. Bei der exakten Berechnung wird vermieden, daß durch einen Näherungswert eine unnötig vergrößerte Wanddicke ermittelt wird.

Bei einer, besonders bevorzugten Weiterbildung des Verfahrens sind in einem Rohrbauteile-Speicher Bauteil-Codes für Rohrbauteile nach Rohrklassen geordnet abgespeichert. Dadurch wird der Zugriff auf ein konkretes Rohrbauteil weiter vereinfacht und beschleunigt, nachdem für einen zu erneuernden oder zu erstellenden Leitungsabschnitt, insbesondere weitgehend automatisiert in einer elektronischen Datenverarbeitungsanlage, eine Rohrklasse generiert worden ist.

Die in dem Rohrbauteile-Speicher abgespeicherten Rohrklassen sind bevorzugt aus einem oder mehreren Sätzen von Leitungsparametern eindeutig generiert und es ist jedem Rohrbauteil mindestens eine Rohrklasse zugeordnet.

Ein Rohrbauteil kann durch seinen Bauteil-Code in dem Rohrbauteile-Speicher insbesondere unter mehreren Rohrklassen eingeordnet und abgespeichert sein.

Nach einer anderen bevorzugten Weiterbildung des Verfahrens wird entweder, falls die für den ausgewählten Satz von Leitungsparametern generierte Rohrklasse in dem Rohrbauteile-Speicher noch nicht existierte, diese als neue Rohrklasse in den Rohrbauteile-Speicher aufgenommen und ein Bauteil-Code eines Rohrbauteils, das aus dem bestimmten Werkstoff besteht und die bestimmte Wanddicke aufweist, festgelegt und dieser Rohrklasse zugeordnet oder, falls die für den ausgewählten Satz von Leitungsparametern generierte Rohrklasse bereits existierte, ein unter dieser Rohrklasse abgespeicherter Bauteil-Code aus dem Rohrbauteile-Speicher ausgewählt.

Diese Weiterbildung bedeutet insbesondere, daß, falls die für den ausgewählten Satz von Leitungsparametern generierte Rohrklasse in dem Rohrbauteile-Speicher noch nicht existierte, das Verfahren in einer Art Lern- oder Aufbaumodus arbeitet, während dessen der Rohrbauteile-Speicher nach und nach aufgebaut, d.h. mit Zuordnungen eines Bauteil-Codes zu einer Rohrklasse gefüllt wird. In diesem Lernmodus muß für das Rohrbauteil noch ein Bauteil-Code festgelegt werden, wozu beispielsweise im Falle der Durchführung des Verfahrens mittels einer elektronischen Datenverarbeitungsanlage eine softwaregesteuerte Benutzereingabe vorgesehen sein kann. Das Programm arbeitet ferner in einer Art Ausführmodus, falls die für den ausgewählten Satz von Leitungsparametern generierte Rohrklasse bereits existierte, wobei die beispielsweise während des Lernmodus in dem Rohrbauteile-Speicher abgelegten Daten benutzt werden.

Der entweder -im Ausführmodus- ausgewählte bzw. -im Lernmodus- festgelegte Bauteil-Code wird beispielsweise zur Ansteuerung eines Rohrbauteile beinhaltenden automatisierten Lagers verwendet.

Dadurch ergibt sich der Vorteil, daß der gesamte Prozeß ausgehend von einem ausgewählten Satz von Leitungsparametern für einen zu erstellenden oder zu erneuernden Leitungsabschnitt bis hin zum physischen Vorliegen eines Rohrbauteiles beim Monteur weitgehend automatisiert und ohne Einschaltung menschlicher Verstandestätigkeit abläuft, insbesondere falls das Verfahren gerade im Ausführmodus arbeitet.

Insbesondere wird der zu erstellende oder zu erneuernde Leitungsabschnitt unter Benutzung des zu dem ausgewählten bzw. festgelegten Bauteil-Code gehörigen Rohrbauteiles erstellt bzw. erneuert.

Durch die nach dem Verfahren nach der Erfindung angegebene Art und Weise der Generierung der Rohrklasse wird in vorteilhafter Weise sichergestellt, daß das Rohrbauteil nur dann in den Leitungsabschnitt eingebaut wird, falls es dieselbe Rohrklasse wie dieser aufweist und somit der Einbau unter dem Gesichtspunkt der maximalen zu erwartenden Belastung zulässig ist. Einem Leitungsabschnitt wird nämlich durch das Verfahren eindeutig eine Rohrklasse zugeordnet.

Dadurch, daß - wie weiter oben beschrieben - ein und dasselbe Rohrbauteil durch seinen Bauteil-Code in dem Rohrbauteile-Speicher unter mehreren Rohrklassen eingeordnet und abgespeichert sein kann, könnte das Rohrbauteil gegebenenfalls auch in verschiedene Leitungsabschnitte, insbesondere in Leitungsabschnitte mit unterschiedlichen Rohrklassen und somit stark unterschiedlichen Leitungsparametern, eingebaut werden. Es ist aber bei Durchführung der Generierung einer Rohrklasse nach dem Verfahren nach der Erfindung in jedem Falle sichergestellt, daß nur ein ausreichend belastbares Rohrbauteil eingebaut wird.

Nach einer Ausgestaltung des Verfahrens umfassen die den Leitungsabschnitten jeweils zugeordneten Sätze von Leitungsparametern - neben einem maximal zulässigen Druck, einer maximal zulässigen Temperatur sowie einem Nenndurchmesser - eine Werkstoffgattung und/oder eine Sicherheitsstufe. Die Werkstoffgattung kann beispielsweise ein Oberbegriff für mehrere Werkstoffe sein. Z.B. kann die Werkstoffgattung "Edelstahl", "austenitischer Stahl", "rostfreier Stahl" oder "Nicht-Eisenmetall" sein. Die Sicherheitsstufe kann beispielsweise eine Information dahingehend enthalten, um wieviel kleiner als der dem Werkstoff zugeordnete Festigkeitswert die maximal zulässige Transversalspannung gewählt werden muß. Die Sicherheitsstufe enthält in diesem Falle quasi eine Sicherheitsreserve, welche der zu erstellende bzw. zu erneuernde Leitungsabschnitt aufzuweisen hat.

Nach einer anderen besonders bevorzugten Weiterbildung des Verfahrens wird aus der ermittelten minimalen Wanddicke und abgespeicherten minimalen Wanddicken-Vergleichswerten ein kleinster erlaubter Biegeradius für das ausgewählte Rohrbauteil berechnet. Dadurch ergibt sich der zusätzliche Vorteil, daß beim Einbau des zu dem Bauteil-Code gehörigen Rohrbauteiles in den Leitungsabschnitt dem Monteur oder Installateur die zusätzliche Information vorliegt, wie stark er das Rohrbauteil, insbesondere ein geradliniges, gewinkeltes oder verzweigtes Rohr, verbiegen darf.

Es ist beispielsweise auch vorteilhaft, daß die generierte Rohrklasse und/oder der bestimmte Außendurchmesser und/oder die bestimmte Wanddicke, bevorzugt zusammen mit dem kleinsten erlaubten Biegeradius, auf einem Datensichtgerät angezeigt werden.

Nach einer ganz besonders bevorzugten Ausgestaltung des Verfahrens werden bei der Generierung der Rohrklasse mehrere alternative Werkstoffe berücksichtigt.

Dies geschieht beispielsweise dadurch, daß zunächst - z.B. im Verfahrensschritt a) - mehrere Werkstoffe ausgewählt werden, für die - z.B. bis zum Verfahrensschritt d) - jeweils eine minimale Wanddicke ermittelt wird, und daß dann derjenige dieser Werkstoffe ausgewählt und für die weitere Berechnung - z.B. in den Verfahrensschritten e) und f) - zugrunde gelegt wird, der zu der kleinsten Wanddicke führt.

Dadurch wird in vorteilhafter Weise z.B. erreicht, daß ein höherwertiger Werkstoff, für den eine geringere Wanddicke ermittelt wird, ausgewählt wird, was unter Umständen zu einer Material- und/oder Kostenersparnis führen kann.

Die auf eine Datenverarbeitungsanlage gerichtete Aufgabe wird gelöst durch eine solche Datenverarbeitungsanlage, in die ein Programm zur Durchführung des Verfahrens, insbesondere mit seinen Ausgestaltungen und Weiterbildungen, geladen ist.

Zwei Ausführungsbeispiele eines Verfahrens nach der Erfindung werden anhand der Figuren 1 bis 3 näher dargestellt. Es zeigen:

FIG 1    einen Ausschnitt aus einem Rohrleitungssystem,

FIG 2    ,den stark vereinfachten und schematisierten Verfahrensablauf eines eine Rohrklasse generierenden Verfahrens und

FIG 3    das gleichfalls stark vereinfachte Ablaufdiagramm eines Verfahrens, welches zusätzlich zu dem in Figur 2 dargestellten Verfahren einen Bauteil-Code festlegt bzw. auswählt.

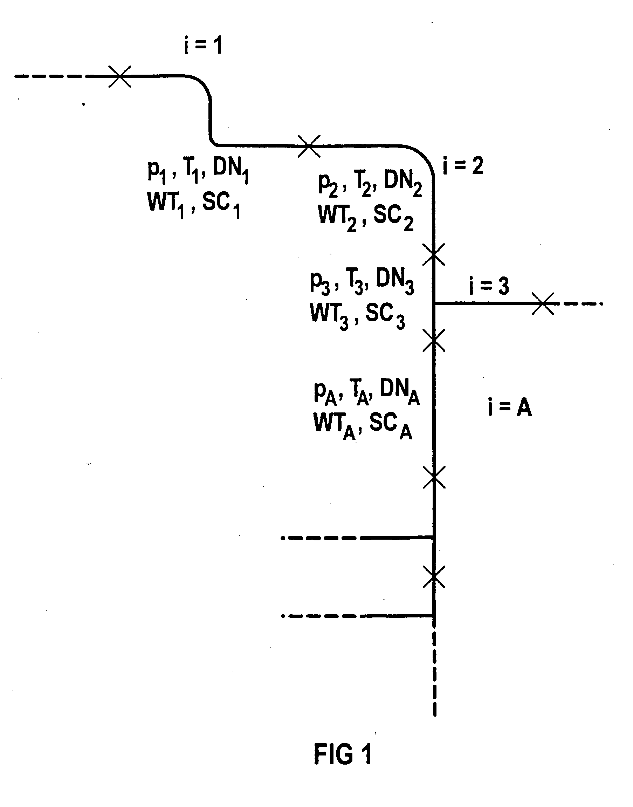

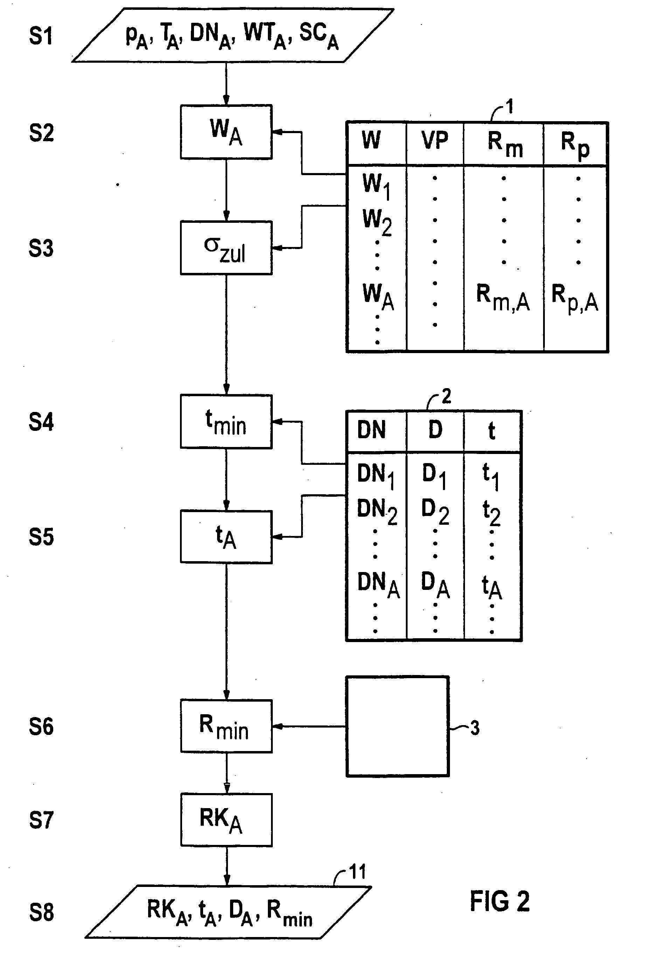

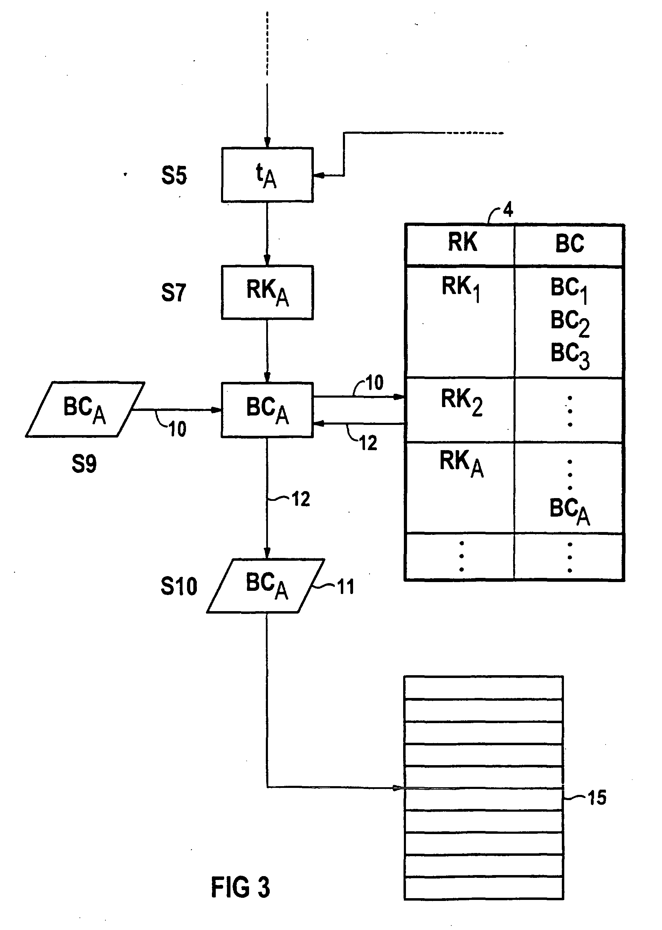

Das in Figur 1 dargestellte Rohrleitungssystem besteht aus mehreren Leitungsabschnitten i=1,2,.... Den Leitungsabschnitten ist jeweils ein Satz von bekannten Leitungsparametern zugeordnet, der einen maximal zulässigen Druck $p_i$, eine maximal zulässige Temperatur $T_i$, einen Nenndurchmesser $DN_i$, eine Werkstoffgattung $WT_i$ sowie eine Sicherheitsstufe $SC_i$ umfaßt. Es wird für die folgenden Betrachtungen davon ausgegangen, daß ein Leitungsabschnitt i=A in dem Rohrleitungssystem erstellt werden soll und ein Rohrbauteil dort eingebaut werden soll, das für die in dem Leitungsabschnitt gemäß den Leitungsparametern auftretende Belastung adäquat ist.

Das in Figur 2 dargestellte Beispiel eines Verfahrens nach der Erfindung beginnt in einem ersten Schritt S1 mit einer Eingabe oder einem Einlesen eines Satzes von Leitungsparametern, der dem zu erstellenden oder zu erneuernden Leitungsabschnitt zugeordnet ist. Der Satz umfaßt einen maximal zulässigen Druck $p_A$, eine maximal zulässige Temperatur $T_A$, einen Nenndurchmesser $DN_A$, eine Werkstoffgattung $WT_A$ und eine Sicherheitsstufe $SC_A$. Die Werkstoffgattung $WT_A$ beschreibt z.B. eine Korrosionseigenschaft, z.B. "Nichtrostender Stahl", oder eine Gruppe von Werkstoffen, z.B. "Austenitischer Stahl" oder "Ferritischer Stahl". Die Sicherheitsstufe $SC_A$ ist durch einen Sicherheitsfaktor (Sicherheitsbeiwert) ausgezeichnet.

In einem ersten Speicher 1 sind verschiedenen Werkstoffen $W_1$, $W_2$, ... jeweils eine Verwendungspriorität VP und Festigkeitswerte, insbesondere eine Zugfestigkeit $R_m$ und eine Dehngrenze $R_p$,. z.B. die 0.2%-Dehngrenze $R_{p0,2}$, zugeordnet. Der erste Speicher 1 ist in Form einer oder mehrerer verknüpfter Tabellen EDV-technisch realisiert.

Aus dem ersten Speicher 1 werden in einem zweiten Schritt S2 ein Werkstoff $W_A$ mit der höchsten Verwendungspriorität VP und die dem Werkstoff $W_A$ zugeordneten Festigkeitswerte $R_{m,A}$ und $R_{p,A}$ ausgewählt.

Die Zugfestigkeit $R_{m,A}$ sowie die Dehngrenze $R_{p,A}$ werden in einem nachfolgenden dritten Schritt S3 jeweils durch den die Sicherheitsstufe $SC_A$ auszeichnenden Wert dividiert und das Minimum der beiden Quotienten ergibt die maximal zulässige Transversalspannung $\sigma_{zul}$ gemäß folgender Gleichung:

$$\sigma_{zul} = \min\left(\frac{R_{m,A}}{SC_A}, \frac{R_{p,A}}{SC_A}\right)$$

In einem zweiten Speicher 2 sind für zur Verfügung stehende Rohrbauteile Nenndurchmesser $DN_1$, $DN_2$,... , Außendurchmesser $D_1$, $D_2$, ... sowie Wanddicken $t_1$, $t_2$,... abgespeichert. Dabei kann verschiedenen Nenndurchmessern DN der gleiche Außendurchmesser D zugeordnet ein. Jedenfalls erlaubt der zweite Speicher 2 die Bestimmung eines zu einem Nenndurchmesser $DN_A$ gehörigen Außendurchmessers $D_A$. Der zweite Speicher 2 ist in Form einer oder mehrerer verknüpfter Tabellen EDV-technisch realisiert.

Zur Verfügung stehende Rohrbauteile sind beispielsweise solche Rohrbauteile, die allgemein käuflich erhältlich sind, insbesondere solche, die einen Normdurchmesser und eine Normwandstärke aufweisen, oder solche Rohrbauteile, die in einem Rohrbauteilelager eingelagert oder bevorratet sind.

Aus dem Außendurchmesser $D_A$ und der Transversalspannung $\sigma_{zul}$ wird in einem vierten Schritt S4 eine minimale Wanddicke $t_{min}$ unter Auswertung der Formel

$$t_{min} = \frac{p_A \cdot D_A}{2 \cdot \sigma_{zul} \cdot l_f + p_A} + A$$

ermittelt, worin $l_f$ bzw. A einen Longitudinalfaktor bzw. die Summe der in dem Leitungsabschnitt und den Rohrbauteilen auftretenden (maximalen) Toleranzen bezeichnen.

Mit dieser ermittelten minimalen Wanddicke $t_{min}$ wird als fünfter Schritt S5 aus dem zweiten Speicher 2 die nächstgrößere Wanddicke $t_A$ eines zur Verfügung stehenden Rohrbauteiles bestimmt.

In einem dritten Speicher 3 sind minimale Wanddickenvergleichswerte, beispielsweise ISO-Normwerte, gespeichert. Durch Vergleich der ermittelten minimale Wanddicke $t_{min}$ mit den abgespeicherten minimalen Wanddickenvergleichswerten wird in einem sechsten Schritt S6 ein kleinster erlaubter Biegeradius $R_{min}$ für das ausgewählte Rohrbauteil berechnet.

Aus dem ausgewählten Satz von Leitungsparametern $p_A$, $T_A$, $DN_A$, dem Werkstoff $W_A$ und der nächstgrößeren Wanddicke $t_A$ wird in einem siebten Schritt S7 eine für den Leitungsabschnitt eindeutige Rohrklasse $RK_A$ generiert, indem Zahlenwerte bzw. Code-Nummern für den Satz von Leitungsparametern $p_A$, $T_A$, $DN_A$, $WT_A$, $SC_A$, den Werkstoff $W_A$ und die Wanddicke $t_A$ zu einem Code-Namen für die Rohrklasse $RK_A$ zusammengefügt werden.

Im einfachsten Fall sind ausschließlich die für die Belastung des Rohrbauteiles relevanten Daten wie Wanddicke $t_A$ und Werkstoff $W_A$ in dem Code-Namen enthalten. Dann sind zur eindeutigen Identifizierung eines Rohrbauteiles zusätzlich die Kenntnis eines Nenndurchmessers $DN_A$ und eines Bauteiltyps, z.B. geradliniges Rohr, Rohrbogen o.ä., notwendig. Der Nenndurchmesser $DN_A$ und der Bauteiltyp können aber bei einer weitergehenden Ausgestaltung des Verfahrens ebenfalls Bestandteil des Code-Namens der Rohrklasse $RK_A$ sein.

Das in Figur 2 dargestellt Verfahrensbeispiel endet mit einem achten Schritt S8, in dem die generierte Rohrklasse $RK_A$, der bestimmte Außendurchmesser $D_A$, die bestimmte Wanddicke $t_A$ und der kleinste erlaubte Biegeradius $R_{min}$ auf einem Datensichtgerät 11 angezeigt werden.

Das in Figur 3 dargestellte Beispiel eines Verfahrens nach der Erfindung läuft bis zu dem fünften Schritt S5, in dem unter Zuhilfenahme des zweiten Speichers 2 die nächstgrößere Wanddicke $t_A$ eines zur Verfügung stehenden Rohrbauteiles bestimmt wird, genauso ab, wie das in Figur 2 dargestellte Verfahren. Bei dem in Figur 3 dargestellten Verfahren wird kein kleinster erlaubter Biegeradius $R_{min}$ berechnet. Stattdessen folgt auf die Bestimmung der nächstgrößeren Wanddicke $t_A$ unmittelbar die Generierung einer für den Leitungsabschnitt eindeutigen Rohrklasse $RK_A$ (siebter Schritt S7).

In einem Rohrbauteile-Speicher 4 sind Bauteil-Codes $BC_1$, $BC_2$,... nach Rohrklassen $RK_1$, $RK_2$, ... geordnet abgespeichert. Die abgespeicherten Rohrklassen $RK_1$, $RK_2$,... sind aus einem Satz von Leitungsparametern mit dem in Figur 2 beschriebenen Verfahren generiert worden. Jedem Rohrbauteil ist mindestens eine Rohrklasse eindeutig zugeordnet.

Nach der Generierung der Rohrklasse $RK_A$ analog dem in Figur 2 dargestellten Verfahren sind im Anschluß an den siebten Schritt S7 zwei verschiedene Fallsituationen zu unterscheiden:

Fall 1, Lernmodus: Falls die generierte Rohrklasse $RK_A$ in dem Rohrbauteile-Speicher 4 noch nicht existierte, wird diese als neue Rohrklasse in den Rohrbauteile-Speicher 4 aufgenommen. Ein Bauteil-Code $BC_A$ eines Rohrbauteiles, das aus dem bestimmten Werkstoff $W_A$ besteht und die bestimmte Wanddicke $t_A$ aufweist, wird in einem neunten Schritt S9 durch eine externe Dateneingabe festgelegt und dieser Rohrklasse $RK_A$ zugeordnet. Das Verfahren arbeitet in diesem Fall entlang der mit 10 bezeichneten Ablaufpfeile.

Fall 2, Ausführmodus: Falls die generierte Rohrklasse $RK_A$ in dem Rohrbauteile-Speicher 4 bereits existierte, wird in einem zehnten Schritt S10 ein unter dieser Rohrklasse $RK_A$ abgespeicherter Bauteil-Code $BC_A$ aus dem Rohrbauteile-Speicher 4 ausgewählt und auf einem Datensichtgerät 11 ausgegeben. Das Verfahren arbeitet in diesem Falle entlang der mit 12 gekennzeichneten Ablaufpfeile.

Mit dem festgelegten bzw. ausgewählten Bauteil-Code $BC_A$ ist eindeutig ein tatsächlich existierendes Rohrbauteil identifizierbar, mit dem dann der zu erstellende oder zu erneuernde Leitungsabschnitt erstellt bzw. erneuert wird. Dabei kann der Bauteil-Code $BC_A$ - wie in Figur 3 angedeutet - zur Ansteuerung eines automatischen Lagers 15 dienen, das nach Eingabe des Bauteil-Codes $BC_A$ das Rohrbauteil ausgibt oder liefert. Der Bauteil-Code $BC_A$ kann aber auch dazu benutzt werden, um einen Bestellvorgang auszulösen, falls das Rohrbauteil in dem Lager nicht vorhanden ist.

Falls während dem Betrieb oder der Planung des Rohrleitungssystems ein Leitungsparameter eines Leitungsabschnittes, z.B. der maximal zulässige Druck $p_A$, infolge einer veränderten Auslegung neu festgelegt wird, wird mit dem Verfahren nach der Erfindung eindeutig, schnell und zuverlässig überprüft, ob sich dadurch die Rohrklasse für den Leitungsabschnitt verändert oder nicht. Ändert sich die Rohrklasse, dann wird z.B. mit dem in Figur 3 schematisierten Verfahrensbeispiel sogleich ein zu der veränderten Auslegung passendes Rohrbauteil identifiziert und in den Leitungsabschnitt eingebaut. Das Verfahren nach der Erfindung realisiert also eine quasi dynamische Zuordnung einer Rohrklasse, bzw. eines konkreten Rohrbauteiles, zu einem Leitungsabschnitt.

**Patentansprüche**

1. Computer-implementiertes Verfahren zur Planung und/oder zum Bau und/oder zur Instandhaltung eines aus mehreren Leitungsabschnitten bestehenden Rohrleitungssystemes, insbesondere in einem Kraftwerk, wobei den Leitungsabschnitten (i=1,2,..) jeweils ein Satz von Leitungsparametern zugeordnet ist, der insbesondere einen maximal zulässigen Druck ($p_i$), eine maximal zulässige Temperatur ($T_i$) sowie einen Nenndurchmesser ($DN_i$) umfaßt, **dadurch gekennzeichnet, daß**

   ausgehend von einem ausgewählten (i=A) Satz ($p_A$, $T_A$, $DN_A$) von Leitungsparametern für einen zu erstellenden oder zu erneuernden Leitungsabschnitt ein Werkstoff ($W_A$) und eine für eine Belastung gemäß dem ausgewählten Satz von Leitungsparametern ausreichende Wanddicke ($t_A$) eines zur Verfügung stehenden Rohrbauteiles bestimmt werden, und daß daraus eine für den Leitungsabschnitt eindeutige Rohrklasse ($RK_A$) generiert wird, mit der ein ausreichend belastbares Rohrbauteil für den Leitungsabschnitt identifizierbar ist.

2. Verfahren nach Anspruch 1,
   **dadurch gekennzeichnet,**

   - **daß** in einem ersten Speicher (1) mindestens einem Werkstoff (W) jeweils ein Festigkeitswert und eine Verwendungspriorität zugeordnet sind, sowie
   - **daß** in einem zweiten Speicher (2) Außendurchmesser (D) und Wanddicken (t) von zur Verfügung stehenden Rohrbauteilen gespeichert sind,

   **daß** ausgehend von dem ausgewählten (i=A) Satz ($p_A$, $T_A$, $DN_A$) von Leitungsparametern für den zu erstellenden oder zu erneuernden Leitungsabschnitt

   a) der Werkstoff ($W_A$) **dadurch** bestimmt wird, daß aus dem ersten Speicher (1) ein Werkstoff mit der höchsten Verwendungspriorität (VP) und der diesem Werkstoff ($W_A$) zugeordnete Festigkeitswert ($R_{m,A}$, $R_{p,A}$) ausgewählt werden,
   b) daß für den Werkstoff ($W_A$) die maximal zulässige Transversalspannung ($\sigma_{zul}$) ermittelt wird,
   c) daß aus dem zweiten Speicher (2) ein Außendurchmesser ($D_A$) ausgewählt wird,
   d) daß aus dem Außendurchmesser ($D_A$) und der Transversalspannung ($\sigma_{zul}$) eine minimale Wanddicke ($t_{min}$) ermittelt wird,
   e) daß die Wanddicke ($t_A$) **dadurch** bestimmt wird, daß mit dem Werkstoff ($W_A$) und der minimalen Wanddicke ($t_{min}$) aus dem zweiten Speicher (2) die nächstgrößere Wanddicke ($t_A$) eines zur Verfügung stehenden Rohrbauteiles ermittelt wird und
   f) daß aus dem ausgewählten Satz von Leitungsparametern ($p_A$, $T_A$, $DN_A$), dem Werkstoff ($W_A$) und der nächstgrößeren Wanddicke ($t_A$) die für den Leitungsabschnitt eindeutige Rohrklasse ($RK_A$) generiert wird.

3. Verfahren nach Anspruch 1 oder 2,
   **dadurch gekennzeichnet, daß**
   in einem Rohrbauteile-Speicher (4) Bauteil-Codes ($BC_j$) für Rohrbauteile (j=1,2,..) nach Rohrklassen (RK) geordnet abgespeichert sind.

**4.** Verfahren nach Anspruch 3,
**dadurch gekennzeichnet, daß** eine der abgespeicherten Rohrklassen (RK) aus einem oder mehreren Sätzen von Leitungsparametern ($p_i$, $T_i$, $DN_i$) eindeutig generiert ist und jedem Rohrbauteil mindestens eine Rohrklasse zugeordnet ist.

**5.** Verfahren nach Anspruch 3 oder 4,
**dadurch gekennzeichnet, daß**
entweder, falls die für den ausgewählten Satz von Leitungsparametern ($p_A$, $T_A$, $DN_A$) generierte Rohrklasse ($RK_A$) in dem Rohrbauteile-Speicher (4) noch nicht existierte, diese als neue Rohrklasse in den Rohrbauteile-Speicher (4) aufgenommen und ein Bauteil-Code ($BC_A$) eines Rohrbauteils, das aus dem bestimmten Werkstoff ($W_A$) besteht und die bestimmte Wanddicke ($t_A$) aufweist, festgelegt und dieser Rohrklasse ($RK_A$) zugeordnet wird,
oder, falls die für den ausgewählten Satz von Leitungsparametern ($p_A$, $T_A$, $DN_A$) generierte Rohrklasse ($RK_A$) bereits existierte, ein unter dieser Rohrklasse ($RK_A$) abgespeicherter Bauteil-Code ($BC_A$) aus dem Rohrbauteile-Speicher (4) ausgewählt wird.

**6.** Verfahren nach Anspruch 5,
**dadurch gekennzeichnet, daß**
der ausgewählte bzw. festgelegte Bauteil-Code ($BC_A$) zur Ansteuerung eines Rohrbauteile beinhaltenden automatisierten Lagers (15) verwendet wird.

**7.** Verfahren nach Anspruch 5 oder 6,
**dadurch gekennzeichnet, daß**
der zu erstellende oder zu erneuernde Leitungsabschnitt unter Benutzung des zu dem ausgewählten bzw. festgelegten Bauteil-Code ($BC_A$) gehörigen Rohrbauteils erstellt bzw. erneuert wird.

**8.** Verfahren nach einem der Ansprüche 1 bis 7,
**dadurch gekennzeichnet, daß**
die den Leitungsabschnitten jeweils zugeordneten Sätze von Leitungsparametern eine Werkstoffgattung ($WT_i$, $WT_A$) und/ oder eine Sicherheitsstufe ($SC_i$, $SC_A$) umfassen.

**9.** Verfahren nach einem der Ansprüche 2 bis 8,
**dadurch gekennzeichnet, daß**
aus der ermittelten minimalen Wanddicke ($t_{min}$) und abgespeicherten minimalen Wanddicken-Vergleichswerten ein kleinster erlaubter Biegeradius ($R_{min}$) für das ausgewählte Rohrbauteil berechnet wird.

**10.** Verfahren nach einem der Ansprüche 1 bis 9,
**dadurch gekennzeichnet, daß**
die generierte Rohrklasse ($RK_A$) und/ oder die bestimmte Wanddicke ($t_A$) auf einem Datensichtgerät (11) angezeigt werden.

**11.** Verfahren nach einem der Ansprüche 2 bis 9,
**dadurch gekennzeichnet, daß**
der bestimmte Außendurchmesser ($D_A$) auf einem Datensichtgerät (11) angezeigt wird.

**12.** Verfahren nach einem der Ansprüche 9 bis 11,
**dadurch gekennzeichnet, daß**
der kleinste erlaubte Biegeradius ($R_{min}$) auf einem Datensichtgerät (11) angezeigt wird.

**13.** Verfahren nach einem der Ansprüche 1 bis 12,
**dadurch gekennzeichnet, daß**
bei der Generierung der Rohrklasse ($RK_A$) mehrere alternative Werkstoffe berücksichtigt werden.

**14.** Verfahren nach einem der Ansprüche 2 bis 13,
**dadurch gekennzeichnet, daß**
zunächst mehrere Werkstoffe ausgewählt werden, für die jeweils eine minimale Wanddicke ermittelt wird, und daß dann derjenige dieser Werkstoffe ausgewählt und für die weitere Berechnung zugrundegelegt wird, der zu der kleinsten Wanddicke führt.

**15.** Verfahren nach einem der Ansprüche 2 bis 14,
**dadurch gekennzeichnet, daß** die minimale Wanddicke ($t_{min}$) unter Auswertung der Formel

$$t_{min} \approx \frac{p_A \cdot D_A}{2 \cdot \sigma_{zul} \cdot l_f + p_A} + A$$

ermittelt wird, wobei $p_A$ den maximal zulässigen Druck im zu erstellenden oder zu erneuernden Leitungsabschnitt und $D_A$ $\sigma_{zul}$, $l_f$ und A den bestimmten Außendurchmesser, die ermittelte maximal zulässige Transversalspannung, einen Longitudinalfaktor bzw. die Summe der auftretenden Toleranzen bezeichnen.

**16.** Datenverarbeitungsanlage, in die ein Programm zur Durchführung des Verfahrens nach einem der bisherigen Ansprüche geladen ist.

**Claims**

**1.** Computer-implemented method for planning and/or constructing and/or maintaining a pipeline system which comprises a plurality of line sections, in particular in a power plant, the line sections (i=1,2,..) each being assigned a set of line parameters which comprises, in particular, a maximum permissible pressure ($p_i$), a maximum permissible temperature ($T_i$) and a rated diameter ($DN_i$), **characterized in that**, on the basis of a selected (i=A) set ($p_A$, $T_A$, $DN_A$) of line parameters for a line section which is to be produced or renewed, a material ($W_A$) and a wall thickness ($t_A$), which is sufficient for loading in accordance with the selected set of line parameters, of an available pipe component are specified, and **in that** a pipe class ($RK_A$) which is uniquely defined for the line section is generated therefrom, with which pipe class ($RK_A$) it is possible to identify a sufficiently loadable pipe component for the line section.

**2.** Method according to Claim 1, **characterized**

- **in that**, in a first memory (1), in each case a strength value and a use priority are assigned to at least one material (W), and
- **in that**, in a second memory (2), the external diameter (D) and wall thicknesses (t) of available pipe components are stored,

**in that**, on the basis of the selected (i=A) set ($p_A$, $T_A$, $DN_A$) of line parameters for the line section which is to be produced or renewed,

a) the material ($W_A$) is specified by virtue of the fact that a material with the highest use priority (VP) and the strength value ($R_{m,A}$, $R_{p,A}$) which is assigned to this material ($W_A$) are selected from the first memory (1),
b) in that the maximum permissible transversal stress ($\sigma_{perm}$) is determined for the material ($W_A$),
c) in that an external diameter ($D_A$) is selected from the second memory (2),
d) in that a minimum wall thickness ($t_{min}$) is determined from the external diameter ($D_A$) and the transversal stress ($\sigma_{perm}$),
e) in that the wall thickness ($t_A$) is specified by virtue of the fact that the next largest wall thickness ($t_A$) of an available pipe component is determined from the second memory (2) using the material ($W_A$) and the minimum wall thickness ($t_{min}$) and
f) in that the pipe class ($RK_A$) which is uniquely defined for the line section is generated from the selected set of line parameters ($p_A$, $T_A$, $DN_A$), the material ($W_A$) and the next largest wall thickness ($t_A$).

**3.** Method according to Claim 1 or 2, **characterized in that** component codes ($BC_j$) for pipe components (j=1,2,..) are stored, ordered according to pipe classes (RK), in a pipe component memory (4).

**4.** Method according to Claim 3, **characterized in that** one of the stored pipe classes (RK) is generated in a uniquely defined way from one or more sets of line parameters ($p_i$, $T_i$, $DN_i$), and each pipe component is assigned at least one pipe class.

5. Method according to Claim 3 or 4, **characterized in that** either the pipe class ($RK_A$) is entered as a new pipe class in the pipe component memory (4), if said pipe class ($RK_A$) which has been generated for the selected set of line parameters ($p_A$, $T_A$, $DN_A$) did not yet exist in the pipe component memory (4), and a component code ($BC_A$) of a pipe component which is composed of the specified material ($W_A$) and has the specified wall thickness ($t_A$) is defined and assigned to this pipe class ($RK_A$), or, if the pipe class ($RK_A$) which has been generated for the selected set of line parameters ($p_A$, $T_A$, $DN_A$) already existed, a component code ($BC_A$) which has.been stored under this pipe class ($RK_A$) is selected from the pipe component memory (4).

6. Method according to Claim 5, **characterized in that** the selected and/or defined component code ($BC_A$) is used to actuate an automated storage facility (15) which contains pipe components.

7. Method according to Claim 5 or 6, **characterized in that** the line section which is to be produced or renewed is produced or renewed using the pipe component which is associated with the selected and/or defined component code ($BC_A$).

8. Method according to one of Claims 1 to 7, **characterized in that** the line parameter sets which are respectively assigned to the line sections comprise a material type ($WT_i$, $WT_A$) and/or a safety level ($SC_i$, $SC_A$) .

9. Method according to one of Claims 2 to 8, **characterized in that** a smallest permitted bending radius ($R_{min}$) for the selected pipe component is calculated from the minimum wall thickness ($t_{min}$) which is determined and from the minimum wall-thickness comparison values which are stored.

10. Method according to one of claims 1 to 9, **characterized in that** the pipe class ($RK_A$) which is generated and/or the wall thickness ($t_A$) which is specified are displayed on a visual display unit (11).

11. Method according to one of Claims 2 to 9, **characterized in that** the external diameter ($D_A$) which is specified is displayed on a visual display unit (11).

12. Method according to one of Claims 9 to 11, **characterized in that** the smallest permitted bending radius ($R_{min}$) is displayed on a visual display unit (11).

13. Method according to one of Claims 1 to 12, **characterized in that** a plurality of alternative materials are taken into account in the generation of the pipe class ($RK_A$).

14. Method according to one of Claims 2 to 13, **characterized in that** initially a plurality of materials are selected for which in each case a minimum wall thickness is determined, and **in that** one of these materials which gives rise to the smallest wall thickness is then selected and used as the basis for the further calculation.

15. Method according to one of Claims 2 to 14, **characterized in that** the minimum wall thickness ($t_{min}$) is determined using the formula

$$t_{min} = \frac{p_A \cdot D_A}{2 \cdot \sigma_{perm} \cdot l_f + p_A} + A$$

$p_A$ designating the maximum permissible pressure in the line section which is to be produced or renewed, and $D_A$, $\sigma_{perm}$, $l_f$ and A designating the external diameter which has been specified and the maximum permissible transversal stress which has been determined, a longitudinal factor and/or the sum of the tolerances which occur.

16. Data processing system into which a program for carrying out the method according to one of the preceding claims is loaded.

**Revendications**

1. Procédé mis en oeuvre par ordinateur de planification et/ou de construction et/ou d'entretien d'un système de canalisations constitué de plusieurs tronçons de conduite, notamment dans une centrale électrique, dans lequel il est affecté aux tronçons (i = 1, 2, ...) de conduite, respectivement un jeu de paramètres de conduite qui comprend, notamment, une pression ($p_i$) maximum admissible, une température ($T_i$) maximum admissible ainsi qu'un diamètre ($DN_i$) nominal,
**caractérisé en ce que**
en partant d'un jeu ($p_A$, $T_A$, $DN_A$) sélectionné (i=A) de paramètres de conduite pour un tronçon de conduite à établir ou à renouveler, on détermine un matériau ($W_A$) et une épaisseur ($t_A$) de paroi, suffisante pour une charge conformément au jeu sélectionné de paramètres de conduite, d'un élément de tuyau disponible et **en ce que** l'on en engendre une classe ($RK_A$) de tuyau univoque pour le tronçon de conduite, classe par laquelle on peut identifier un élément de tuyau pouvant être suffisamment chargé pour le tronçon de conduite.

2. Procédé suivant la revendication 1,
**caractérisé**

- **en ce que** l'on associe dans une première mémoire (1) à au moins un matériau (W) respectivement une valeur de résistance et une priorité d'utilisation ainsi que
- **en ce que** l'on mémorise dans une deuxième mémoire (2) les diamètres (D) extérieurs et les épaisseurs (t) de paroi d'éléments de tuyaux disponibles,

**en ce qu'**à partir du jeu ($p_A$, $T_A$, $DN_A$) sélectionné (i=A) de paramètres de conduite pour les tronçons de conduite à établir ou à renouveler,

a) on détermine le matériau ($W_A$) en sélectionnant dans la première mémoire (1) un matériau ayant la priorité (VP) d'utilisation la plus grande et la valeur ($R_{m,A}$, $T_{p,A}$) de résistance associée à ce matériau ($W_A$),
b) on détermine pour le matériau ($W_A$) la tension ($\sigma_{zul}$) transversale maximum admissible,
c) on sélectionne dans la deuxième mémoire (2) un diamètre ($D_A$) extérieur,
d) on détermine à partir du diamètre ($D_A$) extérieur et de la tension ($\sigma_{zul}$) transversale une épaisseur ($t_{min}$) minimum de paroi,
e) on détermine l'épaisseur ($t_A$) de paroi en déterminant par le matériau ($W_A$) et par l'épaisseur ($t_{min}$) minimum de paroi dans la deuxième mémoire (2) l'épaisseur ($t_A$) de paroi la plus grande venant immédiatement ensuite d'un élément de tuyau disponible et
f) on engendre, à partir du jeu sélectionné de paramètres ($p_A$, $T_A$, $DN_A$) de conduite du matériau ($W_A$) et de l'épaisseur ($t_A$) de paroi la plus grande venant immédiatement ensuite la classe ($RK_A$) de tuyau univoque pour le tronçon de conduite.

3. Procédé suivant la revendication 1 ou 2,
**caractérisé en ce que**
l'on mémorise de façon donnée dans une mémoire (4) d'élément de tuyau des codes ($BC_j$) d'élément pour des éléments (j=1, 2, ...) de tuyau suivant les classes (RK) de tuyau.

4. Procédé suivant la revendication 3,
**caractérisé en ce que** l'on engendre de manière univoque l'une des classes (RK) de tuyau mémorisées à partir d'un ou de plusieurs jeux de paramètres ($p_i$, $T_i$, $DN_i$) de conduite et on affecte à chaque élément de tuyau au moins une classe de tuyaux.

5. Procédé suivant la revendication 3 ou 4,
**caractérisé en ce que**
soit dans le cas où la classe ($RK_A$) de tuyau engendrée pour le jeu sélectionné de paramètres ($p_A$, $T_A$, $DN_A$) de conduite n'existe pas encore dans la mémoire (4) d'élément de tuyau, on admet cette classe en tant que nouvelle classe de tuyau dans la mémoire (4) d'élément de tuyau et on lui fixe un code ($BC_A$) d'un élément de tuyau, qui est constitué du matériau ($W_A$) déterminé et de l'épaisseur ($t_A$) de paroi déterminée, et on l'affecte à cette classe ($RK_A$) de tuyau,
ou, dans le cas où la classe ($RK_A$) de tuyau engendrée pour le jeu sélectionné de paramètres ($p_A$, $T_A$, $DN_A$) de conduite existe déjà, on sélectionne un code ($BC_A$) d'éléments mémorisés sous cette classe ($RK_A$) de tuyau dans la mémoire (4) d'éléments de tuyau.

6. Procédé suivant la revendication 5,
**caractérisé en ce que**
l'on utilise le code ($BC_A$) d'élément sélectionné ou fixé pour commander un stockage (15) automatisé contenant des éléments de tuyau.

7. Procédé suivant la revendication 5 ou 6,
**caractérisé en ce que**
l'on établit ou renouvelle le tronçon de conduite à établir ou à renouveler en utilisant l'élément de tuyau appartenant au code ($BC_A$) d'élément sélectionné ou fixé.

8. Procédé suivant l'une des revendications 1 à 7,
**caractérisé en ce que**
les jeux affectés, respectivement, aux tronçons de conduite de paramètres de conduite comprennent un type ($WT_i$, $WT_A$) de matériau et/ou un échelon ($SC_i$, $SC_A$) de sécurité.

9. Procédé suivant l'une des revendications 2 à 8,
**caractérisé en ce que**
l'on calcule à partir de l'épaisseur ($t_{min}$) minimum de paroi déterminée et de valeurs de comparaison d'épaisseur de paroi minimum mémorisées un rayon ($R_{min}$) de courbure le plus petit que l'on peut permettre pour l'élément de tuyau sélectionné.

10. Procédé suivant l'une des revendications 1 à 9,
**caractérisé en ce que**
l'on affiche la classe ($RK_A$) de tuyau engendrée et/ou l'épaisseur ($t_A$) de paroi déterminée sur un appareil (11) de visualisation de données.

11. Procédé suivant l'une des revendications 2 à 9,
**caractérisé en ce que**
l'on affiche le diamètre ($D_A$) extérieur déterminé sur un appareil (11) de visualisation de données.

12. Procédé suivant l'une des revendications 9 à 11,
**caractérisé en ce que**
l'on affiche le rayon ($R_{min}$) de courbure le plus petit qui est permis sur un appareil (11) de visualisation de données.

13. Procédé suivant l'une des revendications 1 à 12,
**caractérisé en ce que**
l'on tient compte, lorsque l'on engendre la classe ($RK_A$) de tuyau, de plusieurs variantes de matériaux.

14. Procédé suivant l'une des revendications 2 à 13,
**caractérisé en ce que**
l'on sélectionne d'abord plusieurs matériaux, pour lesquels on détermine respectivement une épaisseur minimum de paroi et **en ce qu'**ensuite on sélectionne celui des matériaux et on le prend pour base pour le calcul ultérieur qui a l'épaisseur de paroi la plus petite.

15. Procédé suivant l'une des revendications 2 à 14,
**caractérisé en ce que**
l'on détermine l'épaisseur ($t_{min}$) minimum de paroi en exploitant la formule :

$$t_{min} = \frac{p_A \cdot D_A}{2 \cdot \sigma_{zul} \cdot l_f + p_A} + A$$

dans laquelle $p_A$ est la pression maximum admissible dans le tronçon de conduite à établir ou à renouveler et $D_A$ $\sigma_{zul}$. $l_f$ et A désignent le diamètre extérieur déterminé, la tension transversale maximum admissible déterminée, un facteur longitudinal et la somme des tolérances qui se produisent.

16. Installation informatique, dans laquelle est chargé un programme pour la mise en oeuvre du procédé suivant l'une des revendications précédentes.

FIG 1

S1 $p_A, T_A, DN_A, WT_A, SC_A$

S2 $W_A$

| W | VP | $R_m$ | $R_p$ |
|---|---|---|---|
| $W_1$ | $\cdot$ | $\cdot$ | $\cdot$ |
| $W_2$ | $\cdot$ | $\cdot$ | $\cdot$ |
| $\cdot$ | $\cdot$ | $\cdot$ | $\cdot$ |
| $W_A$ | $\cdot$ | $R_{m,A}$ | $R_{p,A}$ |
| $\cdot$ | $\cdot$ | | |

S3 $\sigma_{zul}$

S4 $t_{min}$

| DN | D | t |
|---|---|---|
| $DN_1$ | $D_1$ | $t_1$ |
| $DN_2$ | $D_2$ | $t_2$ |
| $\cdot$ | $\cdot$ | $\cdot$ |
| $DN_A$ | $D_A$ | $t_A$ |
| $\cdot$ | $\cdot$ | $\cdot$ |

S5 $t_A$

S6 $R_{min}$ ← 3

S7 $RK_A$

S8 $RK_A, t_A, D_A, R_{min}$

FIG 2

FIG 3